(19) **Europäisches Patentamt**

**European Patent Office**

**Office européen des brevets**

(11) **EP 0 844 680 B1**

(12) **EUROPEAN PATENT SPECIFICATION**

(45) Date of publication and mention
of the grant of the patent:
**12.02.2003 Bulletin 2003/07**

(51) Int Cl.⁷: **H01M 10/40**, H01M 4/48,
H01M 4/58

(21) Application number: **97120288.2**

(22) Date of filing: **19.11.1997**

(54) **Process for producing an electrode material for a nonaqueous electrolyte secondary battery**

Verfahren zur Herstellung eines Elektrodenmaterials für Sekundärbatterie mit nichtwasserigem
Elektrolyt

Procédé de préparation d'un matériau d'électrode pour pile secondaire à électrolyte non-aqueux

(84) Designated Contracting States:
**DE FR GB**

(30) Priority: **20.11.1996 JP 30965096**
**20.11.1996 JP 30965196**

(43) Date of publication of application:
**27.05.1998 Bulletin 1998/22**

(73) Proprietor: **SANYO ELECTRIC Co., Ltd.**
**Moriguchi-shi, Osaka 570 (JP)**

(72) Inventors:
• **Fujimoto, Masahisa**
**Osaka-shi, Osaka (JP)**

• **Nohma, Toshiyuki**
**Hirakata-shi, Osaka (JP)**
• **Nishio, Koji**
**Hirakata-shi, Osaka (JP)**

(74) Representative: **Glawe, Delfs, Moll & Partner**
**Patentanwälte**
**Postfach 26 01 62**
**80058 München (DE)**

(56) References cited:
**EP-A- 0 239 410**   **WO-A-92/09117**
**FR-A- 2 725 709**   **US-A- 5 294 503**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

FIELD OF THE INVENTION

The present invention relates to nonaqueous electrolyte secondary batteries having a positive electrode, negative electrode and nonaqueous electrolyte, and more particularly to improvements in the electrode material.

BACKGROUND OF THE INVENTION

Attention has been directed to nonaqueous electrolyte secondary batteries wherein lithium is used as the negative electrode active substance for providing an alkali metal ion and which are batteries of high energy density. Active research has been conducted on such batteries.

The solvents generally used for providing the nonaqueous electrolyte of secondary batteries of the type mentioned include ethylene carbonate, propylene carbonate, butylene carbonate, dimethyl carbonate, diethyl carbonate, sulfolane, 1,2-dimethoxyethane, tetrahydrofuran and 1,3-dioxolane, which are used singly or in the form of a mixture of two or three of these compounds. Examples of solutes to be dissolved in such solvents are $LiPF_6$, $LiBF_4$, $LiClO_4$, $LiCF_3SO_3$, $LiAsF_6$, $LiN(CF_3SO_2)_2$, $LiCF_3(CF_2)_3SO_3$, etc. Negative electrode materials generally useful for the negative electrode are carbon materials having a physical value in a specific range. These negative electrode materials have a large number of active sites for absorbing and desorbing lithium ions, and absorb and desorb lithium ions.

However, the nonaqueous electrolyte of the secondary battery described chemically reacts with the negative electrode material forming the negative electrode and becomes decomposed at the active sites. Consequently, the battery has the problem of impaired charge-discharge cycle characteristics due to the deterioration of the electrolyte and the diminution of battery capacity after preservation due to self-discharge.

Accordingly, it is important for the actual use of batteries of this type to inhibit the decomposition reaction of the nonaqueous electrolyte at the active sites in order to diminish the impairment of the cycle characteristics and suppress the self-discharge during preservation.

WO-A-92/09117 discloses a thin film electrode for a secondary battery prepared by electron beam deposition of $LiMn_2O_4$, $LiCoO_2$ or $LiNiO_2$ on an amorphous substrate surface and in situ annealing of the deposited lithium composition. The amorphous nature of substrate surface prevents epitaxial growth or ordered orientation.

SUMMARY OF THE INVENTION

It is an object of the present invention to reduce the impairment of the cycle characteristics of nonaqueous electrolyte secondary batteries by inhibiting the reaction between the electrode material and the nonaqueous electrolyte in the battery. Thus improving the preservation characteristics of electrolyte secondary batteries by suppressing the self-discharge of the battery.

This objects are solved by the features of the main claim.

Advantageous embodiments of the process for producing the electrode material are shown in the subclaims.

Stated more specifically, the disordered material is a mixture of amorphous substance, finely crystalline substance and polycrystalline substance lacking in a long-distance order, a substantially finely crystalline substance, or an amorphous substance containing at least an amorphous phase. Other examples of similarly useful disordered materials are a mixture of finely crystalline phase and polycrystalline phase, and a substantially polycrystalline multi-component substance lacking in a long-distance structural order.

The mixture of amorphous substance, finely crystalline substance and polycrystalline substance lacking in a long-distance order can be obtained by irradiating a polycrystalline substance lacking in a long-distance order with argon plasma.

The process of the present invention may be used for producing an electrode material for a nonaqueous electrolyte secondary battery having a positive electrode, a negative electrode and a nonaqueous electrolyte, the positive electrode or the negative electrode being prepared from an electrode material capable of electrochemically absorbing and desorbing an alkali metal ion. The electrode material comprises a disordered material having at least a structure selected from among an amorphous structure, finely crystalline structure and polycrystalline structure lacking in a long-distance order and also having a lower order than an ordered crystal structure, and an ordered material having a long-distance order.

Stated more specifically, the disordered material is a mixture of amorphous substance, finely crystalline substance and polycrystalline substance lacking in a long-distance order, a substantially finely crystalline substance, or an amorphous substance containing at least an amorphous phase. Other examples of similarly useful disordered materials are a mixture of finely crystalline phase and polycrystalline phase, and a substantially polycrystalline multi-component substance lacking in a long-distance structural order.

The mixture of amorphous substance, finely crystalline substance and polycrystalline substance lacking in a long-distance order can be obtained by irradiating an ordered material having a long-distance order with argon plasma.

The alkali metal ion is, for example, lithium ion.

The disordered material consists substantially of a material selected from the group consisting of carbon, metal oxides and metal sulfides. The disordered material is prepared by irradiation with argon plasma.

An electrode material which is substantially disordered in structure, if made available, serves the contemplated function to exhibit the desired effect.

Examples of solutes usable for preparing the nonaqueous electrolyte of batteries of the type described are $LiPF_6$, $LiBF_4$, $LiClO_4$, $LiCF_3SO_3$, $LiAsF_6$, $LiN(CF_3SO_2)_2$, $LiCF_3(CF_2)_3SO_3$, etc.

Further examples of solvents for use in the nonaqueous electrolyte of such batteries are ethylene carbonate, propylene carbonate, butylene carbonate, vinylene carbonate, cyclopentanone, sulfolane, 3-methylsulfolane, 2,4-dimethylsulfolane, 3-methyl-1,3-oxazolidin-2-one, r -butyrolactone, dimethyl carbonate, diethyl carbonate, ethylmethyl carbonate, methylpropyl carbonate, butylmethyl carbonate, ethylpropyl carbonate, butylethyl carbonate, dipropyl carbonate, 1,2-dimethoxyethane, tetrahydrofuran, 2-methyltetrahydrofuran, 1,3-dioxolane, methyl acetate, ethyl acetate and the like. These solvents are used singly, or in the form of a mixture of two or three of these solvents.

The disordered material useful as the electrode material of the battery and having a lower order than a long-distance order is less likely to have crystal edges which are thought to be reactive with the electrolyte than electrode materials comprising an ordered material having a long-distance order. This inhibits the reaction between such edges of the electrode material and the electrolyte, giving improved cycle characteristics to the nonaqueous electrolyte secondary battery. Further because the self-discharge is suppressed, improved preservation characteristics can be given to the battery.

The electrode material to be used in the present invention is capable of electrochemically absorbing and desorbing alkali metal ions. The absence of the long-distance order in the edges of the material exerts no adverse effect on the absorption and desorption of alkali metal ions by the electrode active substance.

The electrode material comprising a disordered material having a lower order than the ordered crystal structure and an ordered material having a long-distance order is not prepared by a specific method. Insofar as the electrode material has the foregoing structural feature, the material is expected to produce the contemplated effect.

BRIEF DESCRIPTION OF THE DRAWING

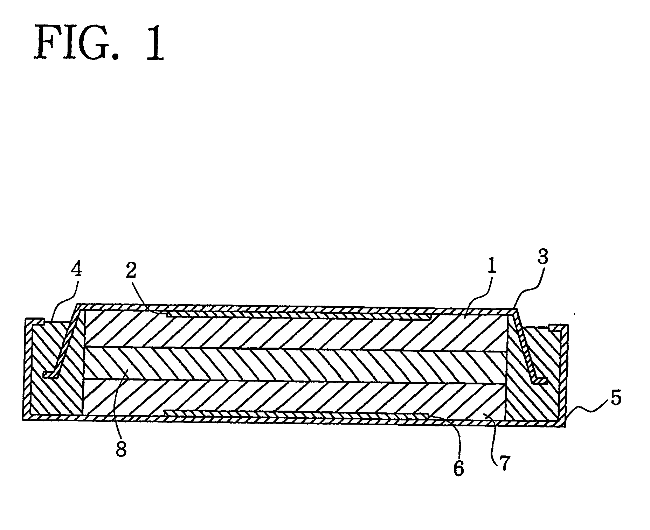

FIG. 1 is a sectional view of a nonaqueous electrolyte secondary battery embodying the invention.

DETAILED DESCRIPTION OF EMBODIMENTS

The present invention will be described below in greater detail with reference to Examples 1 to 9. Electrode materials characteristic of the invention are used for negative electrodes in Examples 1, 4 and 5, and for positive electrodes in Examples 2, 3 and 6 to 9.

(Example 1)

FIG. 1 is a sectional view of a coin-shaped nonaqueous electrolyte secondary battery embodying the process of the invention. A negative electrode 1 is made of pitch coke capable of absorbing and desorbing lithium ions and packed in a negative electrode can 3 which is made of ferrite stainless steel (SUS430) and channel-shaped in section. The electrode 1 is bonded to the inner surface of a negative electrode collector 2 which is secured to the inner bottom surface of the can 3. The can 3 has an outer periphery fixedly fitted in an insulating packing 4 of polypropylene. Fixed to the outer periphery of the packing 4 is a positive electrode can 5 made of stainless steel, channel-shaped in section and opened in a direction opposite to the negative electrode can 3. A positive electrode 7 is secured to the inner surface of a positive electrode collector 6 which is bonded to the inner bottom surface of the can 5. A separator 8 impregnated with a nonaqueous electrolyte is interposed between the positive electrode 7 and the negative electrode 1.

The positive electrode 7 was prepared in the following manner. First, lithium carbonate and cobalt oxide were mixed together. The mixture was heat-treated at 750 °C to obtain $LiCoO_2$ for use as an active substance. The $LiCoO_2$, a carbon powder serving as an electrically conductive agent and a fluorocarbon resin powder serving as a binder were mixed together in a weight ratio of 85:10:5. The mixture was then pressed into a shaped body and dried at 300 °C.

On the other hand, pitch coke having its crystal property substantially removed was used as the material for the negative electrode 1. The negative electrode material comprised a disordered material having a lower order than an ordered crystal structure. The pitch coke used as the starting material was 99.9% in purity, and the lattice constant thereof was 20 Å in Lc value and 3.40 Å in $d_{002}$ value as listed in Table 1.

Table 1

| Example 1 Lattice Constant of Negative Electrode | | | | |
|---|---|---|---|---|
| | Before plasma irradiation | Plasma irradiation time | | |
| | | 10 min | 30 min | 60 min |
| Lc (Å) | 20 | 15 | 10 | up to 8 |
| $d_{002}$ (Å) | 3.40 | 3.43 | 3.51 | 3.57 |

The pitch coke as pulverized to a mean particle size of 20 micrometers was irradiated with argon plasma in a vacuum of $10^{-5}$ torr at an irradiation voltage of 120 V for 1 hour. The pitch coke as the starting material was used in an amount of 10 g. When the pitch coke was irradiated with argon plasma for 10 or 30 minutes, the Lc value thereof altered to 15 or 10Å, and the $d_{002}$ value to 3.43 or 3.51 Å. Eventually 60-minute irradiation gave a negative electrode material which was up to 8 Å in Lc value and 3.57 Å in $d_{002}$ value. When the pitch coke was analyzed by X-ray diffraction using Cukα rays as an X-ray source, it was found that although the peak indicating the crystal property of the coke was slightly broad before the plasma irradiation, the 60-minute irradiation resulted in a very broad peak. This reveals that the negative electrode material had a disordered portion in structure.

Lithium hexafluorophosphate ($LiPF_6$) serving as a solute was dissolved in a solvent mixture (5:5 in volume ratio) of ethylene carbonate (EC) and diethyl carbonate (DEC) in a ratio of I mole/liter to obtain a nonaqueous electrolyte, which was used to prepare a battery A1 of the invention, 20.0 mm in outside diameter and 2.5 mm in thickness. The invention battery A1 was 120 mAh in capacity.

(Comparative Example 1)

A battery was prepared in the same manner as in Example 1 except that usual pitch coke was used as the negative electrode material. The battery will be referred to as the "comparative battery Y1."

The battery A1 embodying the process of the invention and the comparative battery Y1 were tested for preservation characteristics and charge-discharge cycle characteristics. More specifically, each of the batteries as prepared was charged at a charge current of 12 mA to 4.2 V and thereafter discharged at a discharge current of 12 mA to 2.7 V, and this charge-discharge cycle was repeated 500 times. After 500 cycles, the invention battery A1 was found to be 102 mAh in discharge capacity. The comparative battery Y1 was 84 mAh in corresponding capacity. This reveals that the invention battery A1 was smaller in the deterioration ratio of discharge capacity during the charge-discharge cycle test and more excellent in cycle characteristics than the comparative battery Y1.

To determine the preservation characteristics, each of the batteries A1 and Y1 as prepared was charged at a charge current of 12 mA to 4.2 V, discharged at room temperature and then checked for discharge capacity. At this time, each battery was 120 mAh in discharge capacity. Subsequently, the battery was charged at a charge current of 12 mA to 4.2 V, preserved at 60 °C for 60 days and thereafter discharged at room temperature at a discharge current of 12 mA to 2.7 V. The self-discharge rate (%) was then calculated based on the capacity before the preservation.

Consequently, the battery A1 and the comparative battery Y1 were found to be 3% and 20%, respectively, in self-discharge rate. This indicates that as compared with the comparative battery Y1, the battery A1 of the invention was smaller in self-discharge rate and more suppressed in self-discharge during preservation to retain a greater discharge capacity after preservation.

The self-discharge rate was calculated from the following equation.

$$\text{Self-discharge rate (\%)} = 100 \times (1 - C2/C1)$$

wherein C1 is the discharge capacity of the battery immediately after assembly, and C2 is the discharge capacity thereof after preservation at 60 °C for 60 days.

(Example 2)

A battery was prepared wherein the positive electrode was made of $LiCoO_2$ having its crystal property substantially removed and having substantially no structural order. First, $LiCoO_2$ serving as the starting material and pulverized to a mean particle size of 40 micrometers was irradiated with argon plasma in a vacuum of $10^{-5}$ torr at an irradiation voltage of 220 V for 3 hours to obtain a positive electrode material. The starting material, $LiCoO_2$, was used in an amount of 10 g. Table 2 shows the result obtained by analyzing the positive electrode material by X-ray diffraction using Cukα rays as an X-ray source.

Table 2

| Example 2 Lattice Constant of LiCoO$_2$ | | | | |
|---|---|---|---|---|
| | Before plasma irradiation | Plasma irradiation time | | |
| | | 1 hr | 2hrs | 3 hrs |
| Full width at half maximum | 0.15 | 0.35 | 0.56 | 0.78 |

The X-ray diffraction of the LiCoO$_2$ showed that although the peak indicating the crystal property of the material was 0.15 in full width at half maximum and therefore sharp before the irradiation with the plasma, the irradiation for 1, 2 or 3 hours altered the full width at half maximum to 0.35, 0.56 or 0.78, respectively, thus resulting in a very broad peak. This reveals that the irradiation changed the starting material to a material which was substantially disordered in structure.

The battery prepared had the same construction as the comparative battery Y1 of Comparative Example 1 except that the positive electrode material was prepared in the manner described above. The battery will be referred to as the "invention battery A2."

(Comparative Example 2)

A comparative battery Y2 was prepared in the same manner as the comparative battery Y1 of Comparative Example 1.

For comparison, the invention battery A2 and the comparative battery Y2 were tested for cycle characteristics and preservation characteristics by the same methods as above. The invention battery A2 was 10% in deterioration ratio and 4% in self-discharge rate, while the comparative battery Y2 was 20% in deterioration ratio and 10% in self-discharge rate, hence superiority of the invention battery A2.

The deterioration ratio was calculated from the following equation.

$$\text{Deterioration ratio (\%)} = 100 \times (1 - c2/c1)$$

wherein c1 is the discharge capacity of the battery immediately after assembly, and c2 is the discharge capacity thereof after 500 cycles.

(Example 3)

A sulfide, TiS$_2$, having its crystal property substantially removed was used as the material for the positive electrode of a battery. The material comprised a disordered material having a lower order than an ordered crystal structure. First, TiS$_2$ serving as the starting material and pulverized to a mean particle size of 30 micrometers was irradiated with argon plasma in a vacuum of 10$^{-5}$ torr at an irradiation voltage of 220 V for 3 hours to obtain the positive electrode material. The starting material, TiS$_2$, was used in an amount of 10 g. With reference to Table 3 showing the result of X-ray diffraction, the positive electrode material had a sharp peak with a full width at half maximum of 0.17 before the plasma irradiation, whereas the irradiation altered the full width at half maximum to 0.88 indicating a very broad peak. This reveals that the material was substantially disordered in structure.

Table 3

| Example 3 Lattice Constant of TiS$_2$ | | |
|---|---|---|
| | Before plasma irradiation | After plasma irradiation |
| Full width at half maximum | 0.17 | 0.88 |

A negative electrode material was prepared by the contact of pitch coke and lithium metal in a solution of lM of LiPF$_6$ in a mixture of EC and DEC in equal volumes. An invention battery A3 was fabricated in the same manner as the comparative battery Y1 of Comparative Example 1 with the exception of using the positive electrode material and the negative electrode material thus prepared.

(Comparative Example 3)

A comparative battery Y3 was prepared in the same manner as the invention battery A3 except that the same starting material $TiS_2$ as used in Example 3, pulverized to a mean particle size of 30 micrometers, was used in place of the $LiCoO_2$ used for the positive electrode in the comparative battery Y1 of Comparative Example 1.

For comparison, the invention battery A3 and the comparative battery Y3 were tested for cycle characteristics and preservation characteristics by the same methods as above. The invention battery A3 was 10% in deterioration ratio and 4% in self-discharge rate, while the comparative battery Y3 was 30% in deterioration ratio and 26% in self-discharge rate, hence superiority of the invention battery A3.

(Example 4)

A battery was fabricated in which the negative electrode was made of natural graphite which was diminished in crystal property. The starting material, natural graphite, was 99.9% in purity, and the lattice constant thereof was 1000 Å in Lc value and 3.35 Å in $d_{002}$ value. The negative electrode material was prepared by pulverizing the natural graphite to a mean particle size of 20 micrometers and irradiating the graphite with argon plasma in a vacuum of $10^{-5}$ torr at an irradiation voltage of 120 V for 1 hour. The natural graphite as the starting material was used in an amount of 10 g. Table 4 shows the result obtained by analyzing the negative electrode material by X-ray diffraction using Cuk$\alpha$ rays as an X-ray source.

Table 4

| Example 4 Lattice Constant of Negative Electrode | | | | |
|---|---|---|---|---|
| | Before plasma irradiation | Plasma irradiation time | | |
| | | 10 min | 30 min | 60 min |
| Lc (Å) | 1000 | 100 | 50 | up to 10 |
| $d_{002}$ (Å) | 3.35 | 3.39 | 3.45 | 3.56 |

When the natural graphite was irradiated with the plasma for 10, 30 or 60 minutes, the Lc value altered to 100, 50 or up to 10 and the $d_{002}$ value to 3.39, 3.45 or 3.56, respectively. Although the peak indicating the crystal property of the natural graphite was sharp before the irradiation, the irradiation resulted in a peak portion and a broad portion. This reveals that the negative electrode material formed had a disordered portion in structure.

An invention battery B1 was fabricated in the same manner as the battery of Example 1 with the exception of using the negative electrode material thus obtained.

(Comparative Example 4)

A comparative battery Z1 was prepared in the same manner as in Example 4 except that usual natural graphite was used as the negative electrode material.

The battery B1 embodying the process of the invention and the comparative battery Z1 were tested for preservation characteristics and cycle characteristics. More specifically, each of the batteries as prepared was charged at a charge current of 12 mA to 4.2 V and thereafter discharged at a discharge current of 12 mA to 2.7 V, and this charge-discharge cycle was repeated 500 times. After 500 cycles, the invention battery B1 was found to be 108 mAh in discharge capacity. The comparative battery Z1 was 96 mAh in corresponding capacity. This reveals that the invention battery B1 was smaller in the deterioration ratio of discharge capacity during the charge-discharge cycle test and more excellent in cycle characteristics than the comparative battery Z1.

To determine the preservation characteristics, each of the batteries B1 and Z1 as prepared was charged at a charge current of 12 mA to 4.2 V, discharged at room temperature and then checked for discharge capacity. At this time, each battery was 120 mAh in discharge capacity. Subsequently, the battery was charged at a charge current of 12 mA to 4.2 V, preserved at 60 °C for 60 days and thereafter discharged at room temperature at a discharge current of 12 mA to 2.7 V. The self-discharge rate (%) was then calculated based on the capacity before the preservation.

Consequently, the battery B1 and the comparative battery Z1 were found to be 2% and 5%, respectively, in self-discharge rate. This indicates that as compared with the comparative battery Z1, the battery B1 of the invention was smaller in self-discharge rate and more suppressed in self-discharge during preservation to retain a greater discharge capacity after preservation.

(Example 5)

An battery B2 was fabricated in the same manner as the battery B1 of Example 4 except that the negative electrode material used was prepared from the material obtained in Example 4 and having a disordered portion in structure and the natural graphite used for the negative electrode of the comparative battery Z1, by mixing together these two materials in the weight ratio of 1:1.

(Comparative Example 5)

A comparative battery Z2 was prepared in the same manner as the comparative battery Z1 of Comparative Example 4.

For comparison, the invention battery B2 and the comparative battery Z2 were tested for cycle characteristics and preservation characteristics by the same methods as above. The invention battery B2 was 11% in deterioration ratio and 2.5% in self-discharge rate, while the comparative battery Z2 was 20% in deterioration ratio and 5% in self-discharge rate, hence superiority of the invention battery B2.

(Example 6)

A battery was prepared wherein the positive electrode was made of $LiCoO_2$ having its crystal property reduced. First, $LiCoO_2$ serving as the starting material and pulverized to a mean particle size of 20 micrometers was irradiated with argon plasma in a vacuum of $10^{-5}$ torr at an irradiation voltage of 120 V for 1 hour to obtain a positive electrode material. The starting material, $LiCoO_2$, was used in an amount of 10 g. Table 5 shows the result obtained by analyzing the positive electrode material by X-ray diffraction using Cuk$\alpha$ rays as an X-ray source.

Table 5

| Example 6 Lattice Constant of $LiCoO_2$ | | |
|---|---|---|
| | Before plasma irradiation | After plasma irradiation |
| Full width at half maximum | 0.15 | 0.35 |

The X-ray diffraction of the $LiCoO_2$ showed that although the peak indicating the crystal property of the material was 0.15 in full width at half maximum and therefore sharp before the irradiation with the plasma, the irradiation altered the full width at half maximum to 0.35, resulting in a peak portion and a broad portion. This reveals that the material had a disordered portion in structure.

The battery prepared, i.e. battery B3, had the same construction as the comparative battery Z1 of Comparative Example 4 except that the positive electrode material was prepared in the manner described above.

(Comparative Example 6)

A comparative battery Z3 was prepared in the same manner as the comparative battery Z1 of Comparative Example 4.

For comparison, the invention battery B3 and the comparative battery Z3 were tested for cycle characteristics and preservation characteristics by the same methods as above. The invention battery B3 was 9% in deterioration ratio and 3% in self-discharge rate, while the comparative battery Z3 was 15% in deterioration ratio and 6% in self-discharge rate, hence superiority of the invention battery B3.

(Example 7)

A battery B4 was fabricated in the same manner as the invention battery B3 of Example 6 except that the positive electrode material used was prepared from the material obtained in Example 6 and having a disordered portion in structure and the $LiCoO_2$ used for the positive electrode of the comparative battery Z3, by mixing together these two materials in the weight ratio of 1:1.

(Comparative Example 7)

A comparative battery Z4 was prepared in the same manner as the comparative battery Z3 of Comparative Example 6.

For comparison, the invention battery B4 and the comparative battery Z4 were tested for cycle characteristics and preservation characteristics by the same methods as above. The invention battery B4 was 10% in deterioration ratio and 3% in self-discharge rate, while the comparative battery Z4 was 15% in deterioration ratio and 6% in self-discharge rate, hence superiority of the invention battery B4.

(Example 8)

A battery was prepared wherein the positive electrode was made of a sulfide, $TiS_2$, having its crystal property reduced. First, $TiS_2$ serving as the starting material and pulverized to a mean particle size of 20 micrometers was irradiated with argon plasma in a vacuum of $10^{-5}$ torr at an irradiation voltage of 120 V for 1 hour to obtain a positive electrode material. The starting material, $TiS_2$, was used in an amount of 10 g. Table 6 shows the result obtained by analyzing the positive electrode material by X-ray diffraction using $Cuk\alpha$ rays as an X-ray source.

Table 6

| Example 8 Lattice Constant of $TiS_2$ | | |
|---|---|---|
| | Before plasma irradiation | After plasma irradiation |
| Full width at half maximum | 0.15 | 0.39 |

The X-ray diffraction of the $TiS_2$ showed that although the peak indicating the crystal property of the material was 0.15 in full width at half maximum and therefore sharp before the irradiation with the plasma, the irradiation altered the full width at half maximum to 0.39, resulting in a peak portion and a broad portion. This reveals that the material had a disordered portion in structure.

A negative electrode material was prepared by the contact of natural graphite and lithium metal in a solution of lM of $LiPF_6$ in a mixture of EC and DEC in equal volumes. An invention battery B5 was fabricated in the same manner as the comparative battery Z1 of Comparative Example 4 with the exception of using the positive electrode material and the negative electrode material thus prepared.

(Comparative Example 8)

A comparative battery Z5 was prepared in the same manner as the invention battery B5 except that the same starting material $TiS_2$ as used in Example 8, pulverized to a mean particle size of 20 micrometers, was used in place of the $LiCoO_2$ used for the positive electrode in the comparative battery Z1 of Comparative Example 4.

For comparison, the invention battery B5 and the comparative battery Z5 were tested for cycle characteristics and preservation characteristics by the same methods as above. The invention battery B5 was 9% in deterioration ratio and 3% in self-discharge rate, while the comparative battery Z5 was 15% in deterioration ratio and 6% in self-discharge rate, hence superiority of the invention battery B5.

(Example 9)

A battery B6 was fabricated in the same manner as the battery B5 of Example 8 except that the positive electrode material used was prepared from the material obtained in Example 8 and having a disordered portion in structure and the $TiS_2$ used for the positive electrode of the comparative battery Z5, by mixing together these two materials in the weight ratio of 1:1.

(Comparative Example 9)

A comparative battery Z6 was prepared in the same manner as the comparative battery Z5 of Comparative Example 8.

For comparison, the battery B6 and the comparative battery Z6 were tested for cycle characteristics and preservation characteristics by the same methods as above. The invention battery B6 was 10% in deterioration ratio and 3% in self-discharge rate, while the comparative battery Z6 was 15% in deterioration ratio and 6% in self-discharge rate, hence superiority of the invention battery B6.

Some of the electrode materials used in the foregoing examples were prepared by using argon plasma for irradiation. However, the method of preparing such electrode materials is not limited to this method according to the invention. Insofar as electrode materials which are substantially disordered in structure can be provided, these materials are serviceable for the contemplated function to produce the desired effect and to afford batteries of improved characteristics.

The nonaqueous electrolyte secondary battery of the present invention is diminished in the impairment of cycle characteristics. Further with self-discharge suppressed, the battery has outstanding preservation characteristics and is therefore of immense industrial value.

The battery embodying the process of the present invention is not limited to the foregoing embodiments in construction. For example, the disordered material can be provided by a substantially finely crystalline substance, amorphous substance containing at least an amorphous phase, mixture of a finely crystalline phase and a polycrystalline phase, or substantially polycrystalline multi-component substance. Furthermore, the electrode material can substantially be a material selected from the group consisting of carbon, metal oxides and metal sulfides.

## Claims

1.    A process for producing an electrode material of a nonaqueous electrolyte secondary battery having:

> a step of preparing a starting material capable of electrochemically absorbing and desorbing an alkali metal ion and
> a step of irradiating the starting material with argon plasma to form a disordered material in the electrode material.

2.    A process for producing an electrode material of a nonaqueous electrolyte secondary battery as defined in claim 1 wherein the starting material is selected from the group consisting of carbon, metal oxides and metal sulfides.

3.    A process for producing an electrode material of a nonaqueous electrolyte secondary battery as defined in claim 2 wherein the starting material is pitch coke or graphite as carbon.

4.    A process for producing an electrode material of a nonaqueous electrolyte secondary battery as defined in claim 2 wherein the starting material is $LiCoO_2$ as metal oxides.

5.    A process for producing an electrode material of a nonaqueous electrolyte secondary battery as defined in claim 2 wherein the starting material is $TiS_2$ as metal sulfides.

## Patentansprüche

1.    Verfahren zum Herstellen eines Elektrodenmaterials einer Sekundärbatterie mit nicht wässrigem Elektrolyt, mit:

> einem Schritt Herstellen eines Ausgangsmaterials, welches ein Alkalimetallion elektrochemisch absorbieren und desorbieren kann, und
> einem Schritt Bestrahlen des Ausgangsmaterials mit Argonplasma zum Ausbilden eines ungeordneten Materials in dem Elektrodenmaterial.

2.    Verfahren zum Herstellen eines Elektrodenmaterials einer Sekundärbatterie mit nichtwässrigem Elektrolyt nach Anspruch 1,
wobei das Ausgangsmaterial aus der Gruppe gewählt ist, die besteht aus Kohlenstoff, Metalloxiden und Metallsulfiden.

3.    Verfahren zum Herstellen eines Elektrodenmaterials einer Sekundärbatterie mit nicht wässrigem Elektrolyt nach Anspruch 2,
wobei das Ausgangsmaterial Pechkoks oder Graphit als Kohlenstoff ist.

4.    Verfahren zum Herstellen eines Elektrodenmaterials einer Sekundärbatterie mit nichtwässrigem Elektrolyt nach Anspruch 2,
wobei das Ausgangsmaterial Metalloxide $LiCoO_2$ als Kohlenstoff ist.

5.    Verfahren zum Herstellen eines Elektrodenmaterials einer Sekundärbatterie mit nichtwässrigem Elektrolyt nach Anspruch 2,
wobei das Ausgangsmaterial $TiS_2$ als Metallsulfid ist.

**Revendications**

1. Procédé de production de matière d'électrode pour pile secondaire à électrolyte non-aqueux, lequel procédé comporte :

   une étape dans laquelle on prépare un matériau de départ capable d'absorber et de libérer des ions de métal alcalin par voie électrochimique,
   et une étape dans laquelle on irradie le matériau de départ avec un plasma à l'argon, pour former une substance désordonnée au sein de la matière d'électrode.

2. Procédé de production de matière d'électrode pour pile secondaire à électrolyte non-aqueux, conforme à la revendication 1, dans lequel le matériau de départ est choisi dans l'ensemble constitué par le carbone, les oxydes métalliques et les sulfures métalliques.

3. Procédé de production de matière d'électrode pour pile secondaire à électrolyte non-aqueux, conforme à la revendication 2, dans lequel le matériau de départ, en fait de carbone, est du graphite ou du coke de brai.

4. Procédé de productions de matière d'électrode pour pile secondaire à électrolyte non-aqueux, conforme à la revendication 2, dans lequel le matériau de départ, en fait d'oxyde métallique, est du $LiCoO_2$.

5. Procédé de production de matière d'électrode pour pile secondaire à électrolyte non-aqueux, conforme à la revendication 2, dans lequel le matériau de départ, en fait de sulfure métallique, est du $TiS_2$.

# FIG. 1